# EUROPEAN PATENT SPECIFICATION

(11) **EP 2 616 515 B1**
(45) Date of publication and mention of the grant of the patent: **26.08.2015**
(21) Application number: 11776876.2
(22) Date of filing: 19.09.2011
(51) Int. Cl.: C09D 5/00

(54) **ANTI-IMPACT MULTILAYER COATING**
MEHRLAGIGE AUFPRALLSCHUTZBESCHICHTUNG
REVÊTEMENT MULTICOUCHE ANTICHOC

(30) Priority: 17.09.2010 IT BG20100050
(43) Date of publication of application: 24.07.2013
(73) Proprietor: 4V-Coatings S.r.l., 35010 Borgoricco (PD) (IT)
(72) Inventor: VECCHIATO, Mauro, I-35010 Borgoricco (PD) (IT)
(74) Representative: Cantaluppi, Stefano
(86) International application number: PCT/IB2011/054091
(87) International publication number: WO 2012/035520

(56) References cited:
- WO-A1-02/43881
- WO-A1-2005/030893
- US-A1- 2005 271 881
- US-A1- 2007 213 443

## Description

The present invention relates to an anti-impact multilayer coating with high performances.

The use is known of anti-impact coatings used to coat vehicles subjected to the risk of impacts. In particular, these coatings are used to protect sensitive parts of ships, trains, aeroplanes, but also motor cars and lorries, from accidental impacts with objects of various type.

The use of anti-impact coatings in the railway sector is of particular importance as trains, above all modem high speed trains, are frequently subjected to accidental impacts with stones which fly up while the trains are moving.

Impacts which may occur, in particular in the lower portion of trains, can cause serious damage to the train, as some sensitive parts, such as the wheelset (system constituted by axle, wheels, brakes and transmission), are located on the bottom of the carriages and are subjected to high risks of collision with stones and ballast, which could cause breakage of these parts with serious consequences for the trains.

Even the simple removal of paint due to the aforesaid accidental collisions can cause damage to the body of the trains, as the lack of a protective coating exposes the metal of which these bodies are composed to premature corrosion by atmospheric agents which causes premature deterioration of the train as a whole.

Currently, the coatings used for example to coat train bodies, in particular to coat the bottom of carriages and of locomotives, are multi-component materials which are applied to the structures to be protected with normal methods for applying paints. However, these types of coating have some problems related to their stability. In particular, common anti-impact paints are not able to guarantee adequate protection if used at low or at high temperatures.

Situations in which it is necessary to guarantee adequate protection against impacts occur for example, in the case of coatings for the wheelsets of trains, wherein in the area around the braking system high temperatures of up to +150°C can be reached. In these parts subjected to high stresses, the inability of normal coatings to withstand such high temperatures causes delamination of this coating, consequently exposing the parts below to impacts and dents.

The use of these coatings at temperatures below zero, can cause phenomena of excessive stiffening with consequent cracking and/or detaching of the coating in the event of impact. Situations in which temperatures may be well below zero occur in those countries in which for some winter months temperatures can drop to even forty degrees below zero; in these particular situations accidental impacts with pieces of ice or compacted snow can also occur.

Therefore, it would be desirable to have a paint for protecting structures against impacts with other objects, capable of maintaining the properties of resistance even in less than optimal environmental conditions.

It would also be desirable to have an anti-impact paint capable of maintaining its properties even if subjected to high temperature variations, exposure to solvents or corrosive agents and if subjected to abrasion.

It would also be desirable to have an anti-impact paint easily applicable even to irregular surfaces, which can be applied with normal painting techniques and which maintains at length its impact resistance properties.

The object of the present invention is therefore to provide a paint for metal and non-metal parts of trains, ships, aeroplanes, but also motor cars, lorries and working vehicles, capable of protecting the treated surface from any type of degradation caused by possible impact with flying or moving objects, preventing dents, cracks and internal stresses of the material. Another object of the present invention is to provide a paint for protection against impacts capable of withstanding temperature variations, in particular that is capable of performing its anti-impact function in the best possible way even at very high temperatures or temperatures well below zero, thus guaranteeing its performance within a temperature range from -45°C to +180°C.

A further object of the present invention is to provide an anti-impact paint capable of protecting the surface from the abrasive and erosive action of flying particles, such as water, dusts, sands, ice, but also capable of protecting these surfaces against rubbing with moving objects.

Yet another object of the present invention is to provide a paint for protection against impacts capable of protecting the surface from the action of corrosion and degradation caused by corrosive and/or pollutant agents such as acid vapours, basic vapours, atmospheric agents, industrial fumes, microclimates, but also capable of protecting the treated surfaces from contact with chemical substances, such as acids, bases, organic solvents, detergents and water.

In accordance with the present invention, the aforesaid objects are achieved by means of a paint for protection against impacts, characterized in that it comprises:
- epoxy resin or hydroxyl functional polyol 50-75 %
- hollow spheres 0.5-10%
- reinforcing fibres 1.0-7 %
- amine and/or polyisocyanate hardener 23-55 % dents, cracks and internal stresses of the material.

Another object of the present invention is to provide a paint for protection against impacts capable of withstanding temperature variations, in particular that is capable of performing its anti-impact function in the best possible way even at very high temperatures or temperatures well below zero, thus guaranteeing its performance within a temperature range from -45[deg.]C to +180[deg.]C.

A further object of the present invention is to provide an anti-impact paint capable of protecting the surface from the abrasive and erosive action of flying particles, such as water, dusts, sands, ice, but also capable of protecting these surfaces against rubbing with moving objects.

Yet another object of the present invention is to provide a paint for protection against impacts capable of protecting the surface from the action of corrosion and degradation caused by corrosive and/or pollutant agents such as acid vapours, basic vapours, atmospheric agents, industrial fumes, microclimates, but also capable of protecting the treated surfaces from contact with chemical substances, such as acids, bases, organic solvents, detergents and water.

In accordance with the present invention, the aforesaid objects are achieved by means of a paint for protection against impacts, characterized in that it comprises:
- epoxy resin 50-75 %
- hollow spheres 0.5-10 %
- reinforcing fibres 1.0-7 %
- amine hardener 23-55 %
said percentage quantities being expressed in weight in relation to the total weight of the paint. With a paint for protection against impacts according to the present invention, there is provided a paint capable of protecting structures, or portions of structures, against impacts, both accidental and non-accidental, so that it is possible to coat portions of vehicles, such as trains, aeroplanes, but also ships, working machines normally subjected to accidental impacts or impacts caused by the type of work being carried out.

In particular, a paint according to the present invention provides a coating for the bottom of trains, capable of protecting both the carriages and the locomotives against accidental impacts caused by flying stones or other blunt objects during movement of the train. This paint is also capable of performing its protective function even at high temperatures, essential for protecting some parts in proximity of the braking system of trains, which are subjected to high thermal stresses.

The function of protection against impacts of the paint according to the present invention is guaranteed even at temperatures well below zero, or in the presence of solvents or corrosive substances which could damage the metal of which the trains are composed, so that the necessary safety thereof is not guaranteed.

The paint for protection against impacts according to the present invention is composed of an epoxy resin (such as Epikote(R) 828 by Hexion Specialty Chemicals Inc.), in a percentage between 50 and 75 %, an amine hardener (such as Eporezit(R) T-53 by P+M Polimer Kemia Kft) in a percentage between 23 and 55 %, hollow spheres in a percentage between 0.5 and 10 %, reinforcing fibres in a percentage between 1 and 7 %.

The percentages indicated in the present description refer to the quantity in weight of the material in relation to the total weight of the paint.

In a preferred composition, the paint according to the present invention is composed of an epoxy resin, in a percentage between 60 and 70 %, an amine hardener in a percentage between 28 and 42 %, hollow spheres in a percentage between 2.5 and 6 %, reinforcing fibres in a percentage between 1.5 and 3.5 %.

In an even more preferred composition, the paint is composed of an epoxy resin, in a percentage between 65 and 68 %, an amine hardener in a percentage between 28 and 32 %, hollow spheres in a percentage between 2.5 and 4 %, reinforcing fibres in a percentage between 1.5 and 2.5 %.

According to the present invention, the term hollow spheres is intended as spheres of inert material with dimensions between 20 ÷ 200 µm. The material of which these spheres are composed is selected in the group constituted by glass or plastic material or ceramic material.

The term reinforcing fibres is intended as fibres of inert materials appropriately milled to reach a dimension such that they can be amalgamated with the paint and perform their reinforcing function and/or make the coating conductive (carbon fibres, metal fibres). These fibres are selected in the group constituted by glass fibres with dimensions between 0.5 and 2 mm, carbon fibres of dimensions between 0.2 and 2.2 mm, polyamide fibres with dimensions between 0.2 and 2.2 mm, aramid fibres with dimensions between 0.2 and 2.2 mm, metal fibres with dimensions between 0.2 and 2.2 mm, fibres of mineral material (such as Lapinus(R) Granulated Wools by Lapinus Fibres Company) with dimensions between 0.2 and 2.2 mm.

The paint as described in the present formulation can be charged with substances that ensure stability and contribute to facilitating its application. The charge substances are anti- sedimentation additives, wetting and dispersing additives, reaction accelerating additives, pigments, colorants and corrosion inhibiting spatula.

To facilitate application, but also to make the product more homogeneous, the paint can be diluted with organic solvents. Addition of solvent facilitates both preparation, facilitating mixing of the components, and application, in particular when applied by spraying. The solvents can be esters, such as n-butyl acetate, ethyl acetate, isobutyl acetate; alcohols, such as isobutanol, ethanol, n-butanol, benzyl alcohol; ketones, such as methyl isobutyl ketone (MIBK), methyl ethyl ketone (MEK), acetone, diisobutyl ketone (DIBK); chlorinated solvents, such as 1,2-dichloropropane, methylene chloride, aromatic solvents, solvent naphtha (solvesso 100), xylene, toluene, glycols, such as propanol methoxy acetate (PMA), propanol methoxy (PM), butyl glycol.

The paint described is applied to the surface of the structures to be protected from impacts with a thickness that can vary from 1 to 15 mm, preferably from 4 to 10 mm. The paint can be applied to structures made of different materials such as metals, for example steel, aluminium, copper; plastic materials, for example PVC, PMMA, HDPE; composite materials, for example carbon fibre or glass fibre sheets; ceramic materials, and mineral media such as concrete or brick.

In order to obtain a coating to protect against impacts which performs its function in the best possible way, before application of the aforesaid paint, the surfaces to be protected (above all in the case of metal surfaces such as steel and aluminium) are treated with a first layer obtained by a paint comprising a polyvinyl resin in a percentage between 5 and 20 %, a phenolic resin in a percentage between 1 and 10 %, an epoxy resin in a percentage between 7 and 20 %, a polyisocyanate resin in a percentage between 15 and 50 %, a corrosion inhibitor in a percentage between 15 and 50 % and an acid or amine in a percentage between 1 and 15 %.

In a preferred formulation, said first layer is obtained from a paint comprising a polyvinyl resin in a percentage between 8 and 20 %, a phenolic resin in a percentage between 2 and 8 %, an epoxy resin in a percentage between 9 and 9 %, a polyisocyanate resin in a percentage between 30 and 40 %, a corrosion inhibitor in a percentage between 20 and 30 % and an acid or amine in a percentage between 4 and 12 %.

In an even more preferable formulation, said first layer is obtained by a paint comprising a polyvinyl resin in a percentage between 10 and 16 %, a phenolic resin in a percentage between 2 and 5 %, an epoxy resin in a percentage between 14 and 19 %, a polyisocyanate resin in a percentage between 22 and 36 %, a corrosion inhibitor in a percentage between 20 and 27 % and an acid or amine in a percentage between 5 and 10 %.

According to the formulation of the paint described above of which the first coating layer is composed, the epoxy resin is selected in the group composed of solid or liquid epoxy resin from bisphenol A or bisphenol F or A/F mixture, polysulfide modified epoxy resin, epoxy-polyester resin, epoxy-phenolic resin, epoxy vinyl ester resin (the epoxy resin could also contain a functional reactive diluent); the polyvinyl resin can have hydroxyl functionality and is selected in the group composed of, but not limited to, polyvinyl butyral resin, copolymer resin of: vinyl-chloride, vinyl-acetate, vinyl alcohol, hydroxyalkyl acrylate, taken individually of in a mixture. Said corrosion inhibitor is selected in the group composed of borates, chromates, molybdates, zinc phosphates and silicates, aluminium, calcium strontium, sodium and lead, aluminium and zinc oxides, powdered zinc; said acid is selected in the group composed of phosphoric acid and nitric acid, said amine is selected in the group composed of aliphatic cyclic amine, polyamide adduct, tertiary amine, diamine.

Said paint can also be charged with substances that guarantee stability and contribute to facilitating its application, such as anti-sedimentation additives, surfactant additives, surface additives, spreader additives, levelling additives, wetting and dispersing additives, reaction accelerating additives, plasticizing/flexibilizing additives or resins, (such as chlorinated paraffins, phthalates, sebacates, trimellitates, adipates, hydrocarbon resins, epoxy-polysulfides, polyester resins such as LTW by Evonik Degussa Gmbh or K-flex® by King Industries Inc. etc.), colouring pigments and extender additives as described previously, opacifying additives (such as silicas, polyurethane and/or polyamide and/or polypropylene waxes, micas, polyamide powders such as Vestosint® by Evonik Degussa Gmbh etc.), additives that improve adhesion (such as organosilanes, polyolefins, etc.) and functional reactive diluents. It has been noted that the addition of organosilanes improves compatibility of the system on media of inorganic nature (ceramics, glass, concrete or bricks), while the addition of a chlorinated polyolefin improves adhesion on particular plastic media.

Said first layer can be applied with normal methods for applying paints with the aid of brushes or rollers, but can also be applied by spraying.

According to the type of application to be used for said first coating layer, the paint of which it is composed is advantageously charged with suitable organic solvents, which also facilitate its preparation. Said organic solvents can be esters, such as n-butyl acetate, ethyl acetate, isobutyl acetate; alcohols, such as isobutanol, ethanol, n-butanol, benzyl alcohol; ketones, such as methyl isobutyl ketone (MIBK), methyl ethyl ketone (MEK), acetone, diisobutyl ketone (DIBK); chlorinated solvents, such as 1,2-dichloropropane, methylene chloride, aromatic solvents, solvent naphtha (solvesso 100), xylene, toluene, aliphatic solvents, such as mineral turpentine; glycols, such as propanol methoxy acetate (PMA), propanol methoxy (PM), butyl glycol.

The paint for protection against impacts is applied on top of the first protective layer described above, so that a coating is formed covering the surfaced to be treated.

According to the present invention, the first protective layer is applied at a dry thickness of between 8 and 12 µ while the protective paint is applied at a dry thickness of between 4000 and 15000 µm.

With a coating as described above it is possible to treat structures or parts of surfaces of structures of different materials such as metals, for example steel, aluminium, copper, plastic materials, for example PVC, PMMA, HDPE; composite materials, for example carbon fibre or glass fibre sheets; ceramic materials, and mineral media, for example concrete or brick.

Some examples of paint for protection against impacts and of the first protective layer according to the present invention are listed below.

### EXAMPLES OF FIRST PROTECTIVE LAYER

### Example 1

| | % |
|---|---|
| Polyvinyl resin (VROH by Union Carbide Corporation) | 1.3 |
| Phenolic resin (Phenodur® by Cytec Industries Inc.) | 0.4 |
| Epoxy resin (Epikote® 1001 by Hexion Specialty Chemicals Inc.) | 1.7 |
| Anti-sedimentation additive (Bentone® SD2 by Rheox Inc.) | 0.2 |
| Dispersing agent (Disperbyk® by Altana BYK Chemie AG.) | 0.2 |
| Corrosion inhibitor (Zinc Phosphate PZ20 by SNCZ (Silox Group) | 3 |
| Titanium dioxide | 0.7 |
| Talc | 1.8 |
| PM-Acetate | 19.6 |
| Methyl n-Amyl Ketone (MAK) | 20 |
| Methyl Ethyl Ketone (MEK) | 30 |
| Xylene / Dowanol® PM 1:1 | 17 |
| Aliphatic polyisocyanate resin HDI (Desmodur®N75 by Bayer AG) | 3.1 |
| Polyamine/polyamide resin (Aradur®2964 by Huntsmann International LLC) | 1 |
| | 100 |

### Example 2

| | % |
|---|---|
| Polyvinyl resin (Mowital® B-30H by Kuraray Europe GmbH) | 1.3 |
| Phenolic resin (Phenodur® by Cytec Industries Inc.) | 0.4 |
| Epoxy resin (DER 669® by Dow Chemical Company) | 1.2 |
| Anti-sedimentation additive (Bentone® SD2 by Rheox Inc.) | 0.2 |
| Dispersing agent (Disperbyk® by Altana BYK Chemie AG.) | 0.2 |
| Corrosion inhibitor (Zinc Phosphate PZ20 by SNCZ (Silox Group) | 3 |
| Red iron oxide | 0.7 |
| Talc | 1.8 |
| Di-inositol phthalate DINP | 0.2 |
| PM-Acetate | 19.6 |
| Methyl n-Amyl Ketone (MAK) | 20.4 |
| Methyl Ethyl Ketone (MEK) | 30 |
| Xylene / Dowanol® PM 1:1 | 18 |
| Aliphatic polyisocyanate resin HDI (Desmodur®N75 by Bayer AG) | 2.4 |
| Nitric acid solution | 0.5 |
| | 100 |

### Example 3

| | % |
|---|---|
| Polyvinyl resin (Mowital® B-30H by Kuraray Europe GmbH) | 1.3 |
| Phenolic resin (Phenodur® by Cytec Industries Inc.) | 0.4 |
| Epoxy resin (Epikote® 1001 by Hexion Specialty Chemicals Inc.) | 1.7 |
| Anti-sedimentation additive (Bentone® SD2 by Rheox Inc.) | 0.2 |
| Dispersing agent (Disperbyk® by Altana BYK Chemie AG.) | 0.2 |
| Corrosion inhibitor (Zinc Phosphate PZ20 by SNCZ (Silox Group) | 3 |
| Yellow iron oxide | 0.7 |
| Talc | 1.8 |
| PM-Acetate | 19.9 |
| Methyl n-Amyl Ketone (MAK) | 20 |
| Methyl Ethyl Ketone (MEK) | 30 |
| Xylene / Dowanol® PM 1:1 | 18 |
| Aliphatic polyisocyanate resin HDI (Desmodur®N75 by Bayer AG) | 2.2 |
| Phosphoric acid solution | 0.6 |
| | 100 |

After mixing of all the components of the above formulation, the first layer is applied to the parts to be treated within a time of 5-8 hours.

The first protective layer can be applied with a brush, but is difficult to apply a constant thickness. Therefore, application using a roller or by spraying with a HVLP sprayer, or conventional air sprayer, or with a low pressure diaphragm pump is preferred. The dry thickness which is generally obtained with the formulations of the example, applying a wet coat sprayed with horizontal and vertical strokes, is approximately 8÷12 µm.

### EXAMPLES OF PAINT FOR PROTECTION AGAINST IMPACTS

### Example 1

| | | % |
|---|---|---|
| Epoxy resin from bisphenol | A/F (Araldite® GY1955 by Huntsman International LLC or Epikote® 818 by Hexion Specialty Chemicals Inc.) | 58.4 |
| Hydrocarbon resin | (Novares LA-700 by RUTGERS Gmbh) | 5.0 |
| Hollow spheres | (Sphericel® 60-P18 by Potters Industries Inc. or Noblite® G200 by Noblite Company) | 2.3 |
| Dispersing agent | (Disperbyk® by Altana BYK Chemie AG) | 0.1 |
| Pigments | (Titanium oxide, Chrome Oxide green, red iron oxide) | 2.7 |
| Reinforcing fibres | (Rhenogran® AFP-40/EPDM (GE 1909) and Rhenogran® P91-40/EPDM by Rhein Chemie Rheinau GmbH or FAR 700/075 by Heinrich Kautzmann Gmbh or Rockforce® MS675 or Rockforce® MS615 by Lapinus fibres) | 3.1 |
| Solvent | (MEK, MIBK, MAK, MIAK, ETHANOL, ISOBUTANOL, etc) | 2.4 |
| Hardening amine | resin (Epilox® H 10-31 by Leuna Harze Gmbh or Epikure® F206 or Epikure® 05324 by Hexion Specialty Chemicals Inc. or Aradur® 3296 or Aradur 223 by Huntsman International LLC or Eporezit® T-53 of P+M Polimer Kemla Kft or Polypox® H 015 by UPPC Company) | 26 |
| | | 100 |

### Example 2

| | | |
|---|---|---|
| | | % |
| Epoxy resin from bisphenol A | (Araldite® GY253 by Huntsman International LLC or Epikote® 828LVEL or Epikote 816 by Hexion Specialty Chemicals Inc.) | 20.2 |
| Epoxy resin from bisphenol A/F | (Araldite® GY1955 by Huntsman International LLC or Epikote® 818 by Hexion Specialty Chemicals Inc.) | 37.2 |
| Reactive functional diluent | (K-Flex XM-B301 by King Industries Inc or Cardura® 10EP by Specialty Chemicals Inc.) | 3.0 |
| Hollow spheres | (Sphericel® 60-P18 by Potters Industries Inc. or Noblite® G200 by Noblite Company) | 3.3 |
| Dispersing agent | (Disperbyk® by Altana BYK Chemie AG) | 0.1 |
| Talc | | 2.1 |
| Pigments | (Titanium oxide, Chrome Oxide green, red iron oxide) | 2.6 |
| Reinforcing fibres | (Rhenogran® AFP-40/EPDM (GE 1909) and Rhenogran® P91-40/EPDM by Rhein Chemie Rheinau GmbH or FAR 700/075 by Heinrich Kautzmann Gmbh or Rockforce® MS675 or Rockforce® MS615 by Lapinus fibres) | 4.1 |
| Solvent | (MEK, MIBK, MAK, MIAK, ETHANOL, ISOBUTANOL, etc) | 1.4 |
| Hardening amine resin | (Epilox® H 10-31 by Leuna Harze Gmbh or Epikure® F206 or Epikure® 05324 by Hexion Specialty Chemicals Inc. or Aradur® 3296 or Aradur 223 by Huntsman International LLC or Eporezit® T-53 of P+M Polimer Kemla Kft or Polypox ® H 015 by UPPC Company) | 27 |
| | | 100 |

### Example 3

| | | % |
|---|---|---|
| Epoxy resin from bisphenol A | (Araldite® GY253 by Huntsman International LLC or Epikote® 828LVEL or Epikote 816 by Hexion Specialty Chemicals Inc.) | 43.4 |
| Epoxy resin from bisphenol F | (Araldite® GY783 by Huntsman International LLC or Epikote® 862 by Hexion Specialty Chemicals Inc.) | 5.0 |
| Epoxy polysulfide resin | (Thioplast by AkzoNobel N.V.) | 9.0 |
| Hollow spheres | (Sphericel® 60-P18 by Potters Industries Inc. or Noblite® G200 by Noblite Company) | 2.8 |
| Dispersing agent | (Disperbyk® by Altana BYK Chemie AG) | 0.1 |
| Pigments | (Titanium oxide. Chrome Oxide green. red iron oxide) | 4.5 |
| Barium sulfate extender | | 6.1 |
| Reinforcing fibres | (Rhenogran® AFP-40/EPDM (GE 1909) and Rhenogran® P91-40/EPDM by Rhein Chemie Rheinau GmbH or FAR 700/075 by Heinrich Kautzmann Gmbh or Rockforce® MS675 or Rockforce® MS615 by Lapinus fibres) | 2.3 |
| Solvent | (MEK. MIBK. MAK. MIAK. ETHANOL. ISOBUTANOL. etc) | 2.4 |
| Hardening amine resin | (Epilox® H 10-31 by Leuna Harze Gmbh or Epikure® F206 or Epikure® 05324 by Hexion Specialty Chemicals Inc. or Aradur® 3296 or Aradur 223 by Huntsman International LLC or Eporezit® T-53 of P+M Polimer Kemla Kft or Polypox ® H 015 by UPPC Company) | 24.4 |
| | | 100 |

### Example 4

| | | % |
|---|---|---|
| Epoxy resin from bisphenol A | (Araldite® GY253 by Huntsman International LLC or Epikote® 828LVEL or Epikote 816 by Hexion Specialty Chemicals Inc.) | 10 |
| Epoxy resin from bisphenol F | (Araldite® GY783 by Huntsman International LLC or Epikote® 862 by Hexion Specialty Chemicals Inc.) | 47.4 |
| Hollow spheres | (Sphericel® 60-P18 by Potters Industries Inc. or Noblite® G200 by Noblite Company) | 3.8 |
| Dispersing agent | (Disperbyk® by Altana BYK Chemie AG) | 0.1 |
| Talc | | 1.0 |
| Pigments | (Titanium oxide, Chrome Oxide green, red iron oxide) | 2.8 |
| Barium sulfate extender | | 5.1 |
| Reinforcing fibres | (Rhenogran® AFP-40/EPDM (GE 1909) and Rhenogran® P91-40/EPDM by Rhein Chemie Rheinau GmbH or FAR 700/075 by Heinrich Kautzmann Gmbh or Rockforce® MS675 or Rockforce® MS615 by Lapinus fibres) | 2.0 |
| Solvent | (MEK, MIBK, MAK, MIAK, ETHANOL, ISOBUTANOL, etc) | 2.4 |
| Hardening amine resin | (Epilox® H 10-31 by Leuna Harze Gmbh or Epikure® F206 or Epikure® 05324 by Hexion Specialty Chemicals Inc. or Aradur® 3296 or Aradur 223 by Huntsman International LLC or Eporezit® T-53 of P+M Polimer Kemla Kft or Polypox ® H 015 by UPPC Company) | 25.4 |
| | | 100 |

### Example 5

| | | % |
|---|---|---|
| Epoxy resin from bisphenol A/F | (Araldite® GY1955 by Huntsman International LLC or Epikote® 818 by Hexion Specialty Chemicals Inc.) | 59.4 |
| Reactive functional diluent | (K-Flex XM-B301 by King Industries Inc or Cardura® 10EP by Specialty Chemicals Inc.) | 1.0 |
| Hollow spheres | (Sphericel® 60-P18 by Potters Industries Inc. or Noblite® G200 by Noblite Company) | 3.3 |
| Dispersing agent | (Disperbyk® by Altana BYK Chemie AG) | 0.1 |
| Pigments | (Titanium oxide, Chrome Oxide green, red iron oxide) | 2.0 |
| Barium sulfate extender | | 4.0 |
| Reinforcing fibres | (Rhenogran® AFP-40/EPDM (GE 1909) and Rhenogran® P91-40/EPDM by Rhein Chemie Rheinau GmbH or FAR 700/075 by Heinrich Kautzmann Gmbh or Rockforce® MS675 or Rockforce® MS615 by Lapinus fibres) | 3.1 |
| Solvent | (MEK, MIBK, MAK, MIAK, ETHANOL, ISOBUTANOL, etc) | 2.4 |
| Hardening amine resin | (Epilox® H 10-31 by Leuna Harze Gmbh or Epikure® F206 or Epikure® 05324 by Hexion Specialty Chemicals Inc. or Aradur® 3296 or Aradur 223 by Huntsman International LLC or Eporezit® T-53 of P+M Polimer Kemla Kft or Polypox ® H 015 by UPPC Company) | 27 |
| | | 100 |

### Example 6

| | | % |
|---|---|---|
| Epoxy resin from bisphenol A | (Araldite® GY253 by Huntsman International LLC or Epikote® 828LVEL or Epikote 816 by Hexion Specialty Chemicals Inc.) | 30.0 |
| Epoxy resin from bisphenol F | (Araldite® GY783 by Huntsman International LLC or Epikote® 862 by Hexion Specialty Chemicals Inc.) | 28.0 |
| Hollow spheres | (Sphericel® 60-P18 by Potters Industries Inc. or Noblite® G200 | |
| | by Noblite Company) | 4.0 |
| Dispersing agent | (Disperbyk® by Altana BYK Chemie AG) | 0.1 |
| Talc | | 3.4 |
| Pigments | (Titanium oxide, Chrome Oxide green, red iron oxide) | 2.0 |
| Reinforcing fibres | (Rhenogran® AFP-40/EPDM (GE 1909) and Rhenogran® P91-40/EPDM by Rhein Chemie Rheinau GmbH or FAR 700/075 by Heinrich Kautzmann Gmbh or Rockforce® MS675 or Rockforce® MS615 by Lapinus fibres) | 4.0 |
| Solvent | (MEK, MIBK, MAK, MIAK, ETHANOL, ISOBUTANOL, etc) | 2.4 |
| Hardening amine resin | (Epilox® H 10-31 by Leuna Harze Gmbh or Epikure® F206 or Epikure® 05324 by Hexion Specialty Chemicals Inc. or Aradur® 3296 or Aradur 223 by Huntsman International LLC or Eporezit® T-53 of P+M Polimer Kemla Kft or Polypox ® H 015 by UPPC Company) | 26.1 |
| | | 100 |

After mixing all of the components of the above formulations, the paint is applied to the parts to be treated within a time of 20-40 minutes.

The coating can be applied with a brush, spatula and roller or using a suitably modified airless pump (in the passages and filtering parts, nozzles etc.) to prevent the fibre content of the product from clogging the system. The dry thickness which is generally obtained with the example formulations, applied with a suitably calibrated airless system, can reach 1÷2 mm per coat. In order to obtain optimum resistance to impact a dry film with a thickness of at least 4 mm is applied.

According to the type of resins used (more or less flexible) and/or any plasticizers or reactive diluents, coatings can be obtained which are more or less flexible. The tests performed show that the combination of a more flexible coating as first layer followed by a more rigid coating as second layer, offers optimal resistance to impact also at higher temperatures where a soft coating loses cohesion; the principle is that of the motorcycle helmet.

Tests were performed on structures treated with a coating as described in the examples set forth above, according to the standard BS EN 13261 (2003) Class 1, which assesses resistance to impact at -25°, at ambient temperature (+25°). These tests were conducted to assess the resistance to impact of surfaces which form parts of trains or other means of transport.

The table below shows the results obtained from structures coated with a coating according to the present invention.

| **TEST AND METHOD OF REFERENCE** | **REQUIRED by EN 13261 Class 1** | **RESULTS OBTAINED by the COATINGS** |
|---|---|---|
| Resistance to impact *Method EN* 13261 *Annex C* | | +180°C - The projectile does not deform the metal surface |
| | +25°C - The projectile must not deform the metal surface | +25°C - The projectile does not deform the metal surface |
| | -25°C - The projectile must not deform the metal surface | -25°C - The projectile does not deform the metal surface |
| | | -45°C - The projectile does not deform the metal surface |
| Resistance to gritting *Method EN 13261 Annex D* | Loss of paint: max level 3 (loss of less than 30%) | Loss of paint: max level 1 (loss of less than 10%) |
| Resistance to cyclic mechanical stresses *Method EN 13261 Annex F* | After 13x10⁶ rotary cycles: no flaw | After 13 x 10⁶ rotary cycles: no flaw |
| Resistance to salt spray *Method ASTM B-117* | after 1000 hours of NSN corrosion flaw tolerance of less than 2 mm | after 1000 hours of NSN corrosion flaw tolerance of less than 2 mm |

Tests were also conducted according to ASTM and ISO standards, in order to assess the resistance of the coating when subjected to chemical or mechanical stresses; the results of these tests are set forth in the table below.

| **TEST AND METHOD OF REFERENCE** | **RESULTS OBTAINED by the COATINGS** |
|---|---|
| Pull-off for adhesion *Method ISO 4624* | >6MPa |
| MEK chemical resistance *Method ASTM D-4752* | Degree of resistance 5 |
| Resistance to fuels (immersion in TT-S-735) *Method ISO 2812-1* | After 168 hours at Amb. T° No flaw |
| Resistance to fuels (immersion in Diesel oil) *Method ISO 2812-1* | After 168 hours at +40°C No flaw |
| Resistance to water (immersion in DI H2O) *Method ISO 2812-2* | After 168 hours at +60°C No flaw |
| Resistance to hydraulic oil (immers. in MIL-PRF-23699) *Method ISO 2812-2* | After 24 hours at +130°C No flaw |

With a coating according to the present invention it is possible to coat structures or surfaces of structures, of any material or shape, simply and rapidly. It is also possible to touch up the coating so as to guarantee, at all times, adequate protection of the surface to be protected.

The coating described guarantees high performances also at high or at low temperatures, such as also to protect parts subjected to high stresses against impact, guaranteeing optimal functioning thereof.

## Claims

1. Paint for protection against impacts, **characterized in that** it comprises:
- epoxy resin 50-75 %
- hollow spheres 0.5-10 %
- reinforcing fibres 1-7 %
- amine hardener 23-55 %
said percentage quantities being expressed in weight in relation to the total weight of the paint.

2. Paint according to claim 1, **characterized in that** it comprises:
- epoxy resin 60-70 %
- hollow spheres 2.5-6 %
- reinforcing fibres 1.5-3.5 %
- amine hardener 28-42 %
said percentage quantities being expressed in weight in relation to the total weight of the paint.

3. Paint according to one or more of the preceding claims, **characterized in that** it comprises:
- epoxy resin 65-68 %
- hollow spheres 2.5-4 %
- reinforcing fibres 1.5-2.5 %
- amine hardener 28-32 %
said percentage quantities being expressed in weight in relation to the total weight of the paint.

4. Paint according to one or more of the preceding claims, **characterized in that** said hollow spheres are made of inert material selected in the group composed of:
- glass with diameter between 20 and 130 µm
- plastic material with diameter between 20 and 130 µm said reinforcing fibres are selected in the group composed of:
- glass fibres of dimensions between 0.5 and 2.0 mm
- carbon fibres of dimensions between 0.5 and 2.0 mm
- polyamide fibres of dimensions between 0.5 and 2.0 mm
- aramid fibres of dimensions between 0.5 and 2.0 mm

5. Coating for protection against impacts, **characterized in that** it comprises a first layer obtained from a first paint comprising:
- polyvinyl resin 5-20 %
- phenolic resin 1-10 %
- epoxy resin 7-20 %
- polyisocyanate resin 15-50%
- corrosion inhibitor 15-50%
- acid or amine 1 - 15 %
and a second layer obtained by a second paint according to one or more of claims 1 to 4, said percentage quantities being expressed in weight in relation to the total weight of the paint.

6. Coating according to claim 5, **characterized in that** said first paint comprises:
- polyvinyl resin 8-20 %
- phenolic resin 2-8 %
- epoxy resin 9-19 %
- polyisocyanate resin 30-40 %
- corrosion inhibitor 20-30 %
- acid or amine 4-12 %
said percentage quantities being expressed in weight in relation to the total weight of the paint.

7. Coating according to one or more of claims 5 to 6, **characterized in that** said first paint comprises:
- polyvinyl resin 10-16 %
- phenolic resin 2-5 %
- epoxy resin 14-19 %
- polyisocyanate resin 22-36 %
- corrosion inhibitor 20-27 %
- acid or amine 5-10 %
said percentage quantities being expressed in weight in relation to the total weight of the paint.

8. Coating according to one or more of the preceding claims, **characterized in that** said epoxy resin is selected in the group composed of:
- epoxy resin from bisphenol A
- epoxy resin from bisphenol F
- epoxy resin from bisphenol A/F
- polysulfide modified epoxy resin - epoxy polyester resin
- epoxy phenolic resin
- epoxy vinyl ester resin.

9. Coating according to one or more of claims 5 to 7, **characterized in that** said polyvinyl resin is selected in the group composed of:
- polyvinyl butyral resin,
- copolymer resin of vinyl-chloride, vinyl-acetate, vinyl alcohol or hydroxyalkyl acrylate, with hydroxyl functionality,
said corrosion inhibitor is selected in the group composed of:
- borates, chromates, molybdates, zinc phosphates and silicates, aluminium, calcium strontium, sodium, lead
- aluminium oxides, zinc
- powdered zinc
said acid is selected in the group composed of:
- phosphoric acid
- nitric acid
said amine is selected in the group composed of:
- aliphatic cyclic amine
- polyamide adduct
- tertiary amine
- diamine

10. Structure **characterized in that** at least one surface portion thereof is painted with a paint according to one or more of claims 1 to 4.

11. Structure **characterized in that** at least one surface portion thereof is coated with a coating according to one or more of claims 5 to 9.

## Patentansprüche

1. Lack zum Schutz gegen Stöße, **dadurch gekennzeichnet, dass** dieser umfasst:
- Epoxidharz 50 - 75%
- Hohlkugeln 0,5 - 10%
- Verstärkungsfasern 1 - 7%
- Aminhärter 23 - 55%
wobei die Prozentmengen als Gewicht im Verhältnis zum Gesamtgewicht des Lackes ausgedrückt sind.

2. Lack nach Anspruch 1, **dadurch gekennzeichnet, dass** dieser umfasst:
- Epoxidharz 60 - 70%
- Hohlkugeln 2,5 - 6%
- Verstärkungsfasern 1,5 - 3,5%
- Aminhärter 28 - 42%
wobei die Prozentmengen als Gewicht im Verhältnis zum Gesamtgewicht des Lackes ausgedrückt sind.

3. Lack nach einem oder mehreren der vorhergehenden Ansprüche, **dadurch gekennzeichnet, dass** dieser umfasst:
- Epoxidharz 65 - 68%
- Hohlkugeln 2,5 - 4%
- Verstärkungsfasern 1,5 - 2,5%
- Aminhärter 28 - 42%
wobei die Prozentmengen als Gewicht im Verhältnis zum Gesamtgewicht des Lackes ausgedrückt sind.

4. Lack nach einem oder mehreren der vorhergehenden Ansprüche, **dadurch gekennzeichnet, dass** die Hohlkugeln aus einem inerten Material hergestellt sind, das aus der Gruppe ausgewählt ist, bestehend aus:
- Glas mit einem Durchmesser zwischen 20 und 130 µm
- Kunststoffmaterial mit einem Durchmesser zwischen 20 und 130 µm,
wobei die Verstärkungsfasern aus der Gruppe ausgewählt sind, bestehend aus:
- Glasfasern mit Abmessungen zwischen 0,5 und 2,0 mm
- Kohlefasern mit Abmessungen zwischen 0,5 und 2,0 mm
- Polyamidfasern mit Abmessungen zwischen 0,5 und 2,0 mm
- Aramidfasern mit Abmessungen zwischen 0,5 und 2,0 mm.

5. Beschichtung zum Schutz gegen Stöße, **dadurch gekennzeichnet, dass** diese eine erste Schicht, die aus einem ersten Lack erhalten wird, umfassend:
- Polyvinylharz 5 - 20 %
- Phenolharz 1 - 10 %
- Epoxidharz 7 - 20 %
- Polyisocyanatharz 15 - 50 %
- Korrosionsschutz 15-50%
- Säure oder Amin 1 - 15 %
und eine zweite Schicht umfasst, die aus einem zweiten Lack gemäß einem oder mehreren der Ansprüche 1 - 4 erhalten wird, wobei die Prozentmengen als Gewicht im Verhältnis zum Gesamtgewicht des Lackes ausgedrückt sind.

6. Beschichtung nach Anspruch 5, **dadurch gekennzeichnet, dass** der erste Lack umfasst:
- Polyvinylharz 8 - 20 %
- Phenolharz 2 - 8 %
- Epoxidharz 9-19%
- Polyisocyanatharz 30 - 40 %
- Korrosionsschutz 20 - 30 %
- Säure oder Amin 4 - 12 %
wobei die Prozentmengen als Gewicht im Verhältnis zum Gesamtgewicht des Lackes ausgedrückt sind.

7. Beschichtung nach einem oder mehreren der Ansprüche 5 bis 6, **dadurch gekennzeichnet, dass** der ersten Lack umfasst:
- Polyvinylharz 10 - 16 %
- Phenolharz 2 - 5 %
- Epoxidharz 14-19%
- Polyisocyanatharz 22 - 36 %
- Korrosionsschutz 20 - 27 %
- Säure oder Amin 5 - 10 %
wobei die Prozentmengen als Gewicht im Verhältnis zum Gesamtgewicht des Lackes ausgedrückt sind.

8. Beschichtung nach einem oder mehreren der vorhergehenden Ansprüche, **dadurch gekennzeichnet, dass** das Epoxidharz ausgewählt ist aus der Gruppe, bestehend aus:
- Epoxidharz aus Bisphenol A
- Epoxidharz aus Bisphenol F
- Epoxidharz aus Bisphenol A/F
- Polysulfid modifiziertes Epoxidharz - Epoxidpolyesterharz
- Epoxidphenolharz
- Epoxidvinylesterharz.

9. Beschichtung nach einem oder mehreren der Ansprüche 5 bis 7, **dadurch gekennzeichnet, dass** das Polyvinylharz ausgewählt ist aus der Gruppe, bestehend aus:
- Polyvinylbutyralharz
- Copolymerharz aus Vinylchlorid, Vinylazetat, Vinylalkohol, Hydroxyalkylacrylat, mit einer Hydroxylfunktionalität,
wobei der Korrosionsschutz ausgewählt ist aus der Gruppe, bestehend aus:
- Boraten, Chromaten, Molybdaten, Zinkphosphaten und Silikaten, Aluminium, Calcium, Strontium, Natrium, Blei
- Aluminiumoxiden, Zink
- Zinkpulver
wobei die Säure ausgewählt ist aus der Gruppe, bestehend aus:
- Phosphorsäure
- Salpetersäure
wobei das Amin ausgewählt ist aus der Gruppe, bestehend aus:
- aliphatischem cyclischem Amin
- Polyamid-Addukt
- tertiärem Amin
- Diamin

10. Struktur, **dadurch gekennzeichnet, dass** zumindest ein Oberflächenbereich davon mit einem Lack gemäß einem oder mehreren der Ansprüche 1 bis 4 beschichtet ist.

11. Struktur, **dadurch gekennzeichnet, dass** zumindest ein Oberflächenbereich davon mit einer Beschichtung gemäß einem oder mehreren der Ansprüche 5 bis 9 beschichtet ist

## Revendications

1. Peinture de protection antichoc, **caractérisée en ce qu'**elle comprend :
- 50 à 75 % de résine époxyde
- 0,5 à 10 % de sphères creuses
- 1 à 7 % de fibres de renforcement
- 23 à 55 % de durcisseur amine
lesdites quantités en pourcentage étant exprimées en poids par rapport au poids total de la peinture.

2. Peinture selon la revendication 1, **caractérisée en ce qu'**elle comprend :
- 60 à 70 % de résine époxyde
- 2,5 à 6 % de sphères creuses
- 1,5 à 3,5 % de fibres de renforcement
- 28 à 42 % de durcisseur amine
lesdites quantités en pourcentage étant exprimées en poids par rapport au poids total de la peinture.

3. Peinture selon une ou plusieurs des revendications précédentes, **caractérisée en ce qu'**elle comprend :
- 65 à 68 % de résine époxyde
- 2,5 à 4 % de sphères creuses
- 1,5 à 2,5 % de fibres de renforcement
- 28 à 32 % de durcisseur amine
lesdites quantités en pourcentage étant exprimées en poids par rapport au poids total de la peinture.

4. Peinture selon une ou plusieurs des revendications précédentes, **caractérisée en ce que** lesdites sphères creuses sont constituées d'un matériau inerte choisi dans le groupe composé de :
- verre ayant un diamètre compris entre 20 et 130 µm
- matériau plastique ayant un diamètre compris entre 20 et 130 µm lesdites fibres de renforcement sont choisies dans le groupe composé de :
- fibres de verre de dimensions comprises entre 0,5 et 2,0 mm
- fibres de carbone de dimensions comprises entre 0,5 et 2,0 mm
- fibres de polyamide de dimensions comprises entre 0,5 et 2,0 mm
- fibres d'aramide de dimensions comprises entre 0,5 et 2,0 mm.

5. Revêtement de protection antichoc, **caractérisé en ce qu'**il comprend une première couche obtenue à partir d'une première peinture comprenant :
- 5 à 20 % de résine polyvinylique
- 1 à 10 % de résine phénolique
- 7 à 20 % de résine époxyde
- 15 à 50 % de résine de polyisocyanate
- 15 à 50 % d'inhibiteur de corrosion
- 1 à 15 % d'acide ou d'amine
et une seconde couche obtenue par une seconde peinture selon une ou plusieurs des revendications 1 à 4, lesdites quantités en pourcentage étant exprimées en poids par rapport au poids total de la peinture.

6. Revêtement selon la revendication 5, **caractérisé en ce que** ladite première peinture comprend :
- 8 à 20 % de résine polyvinylique
- 2 à 8 % de résine phénolique
- 9 à 19 % de résine époxyde
- 30 à 40 % de résine de polyisocyanate
- 20 à 30 % d'inhibiteur de corrosion
- 4 à 12 % d'acide ou d'amine
lesdites quantités en pourcentage étant exprimées en poids par rapport au poids total de la peinture.

7. Revêtement selon une ou plusieurs des revendications 5 à 6, **caractérisé en ce que** ladite première peinture comprend :
- 10 à 16 % de résine polyvinylique
- 2 à 5 % de résine phénolique
- 14 à 19 % de résine époxyde
- 22 à 36 % de résine de polyisocyanate
- 20 à 27 % d'inhibiteur de corrosion
- 5 à 10 % d'acide ou d'amine
lesdites quantités en pourcentage étant exprimées en poids par rapport au poids total de la peinture.

8. Revêtement selon une ou plusieurs des revendications précédentes, **caractérisé en ce que** ladite résine époxyde est choisie dans le groupe composé de :
- résine époxyde à base de bisphénol A
- résine époxyde à base de bisphénol F
- résine époxyde à base de bisphénol A/F
- résine époxyde modifiée par polysulfure -résine de polyester époxyde
- résine phénolique époxyde
- résine d'ester vinylique époxyde.

9. Revêtement selon une ou plusieurs des revendications 5 à 7, **caractérisé en ce que** ladite résine polyvinylique est choisie dans le groupe composé de :
- résine butyral-polyvinylique,
- résine copolymère de chlorure de vinyle, acétate de vinyle, alcool vinylique ou acrylate d'hydroxyalkyle, avec fonctionnalité hydroxyle,
ledit inhibiteur de corrosion est choisi dans le groupe composé de :
- borates, chromates, molybdates, phosphates et silicates de zinc, aluminium, strontium, calcium, sodium, plomb
- oxydes d'aluminium, zinc
- zinc en poudre
ledit acide est choisi dans le groupe composé de :
- acide phosphorique
- acide nitrique
ladite amine est choisie dans le groupe composé de :
- amine cyclique aliphatique
- adduit de polyamide
- amine tertiaire
- diamine.

10. Structure **caractérisée en ce qu'**au moins une partie de sa surface est peinte avec une peinture selon une ou plusieurs des revendications 1 à 4.

11. Structure **caractérisée en ce qu'**au moins une partie de sa surface est revêtue d'un revêtement selon une ou plusieurs des revendications 5 à 9.
